# EUROPÄISCHE PATENTSCHRIFT

(11) **EP 1 765 628 B1**
(45) Veröffentlichungstag und Bekanntmachung des Hinweises auf die Patenterteilung: **10.09.2008**
(21) Anmeldenummer: 05756644.0
(22) Anmeldetag: 01.07.2005
(51) Int. Cl.: B60K 31/18, B60K 26/02

(54) **VORRICHTUNG ZUR ERZEUGUNG EINES HAPTISCHEN SIGNALS BEI EINEM FAHRZEUG**
DEVICE FOR GENERATING A HAPTIC SIGNAL IN A VEHICLE
DISPOSITIF POUR PRODUIRE UN SIGNAL HAPTIQUE DANS UN VEHICULE

(30) Priorität: 10.07.2004 DE 102004033487
(43) Veröffentlichungstag der Anmeldung: 28.03.2007
(73) Patentinhaber: Bayerische Motorenwerke Aktiengesellschaft, 80809 München (DE)
(72) Erfinder: EHMANNS, Dirk, 81379 München (DE); MARTINEZ VON BÜLOW, Robert, 80686 München (DE)
(86) Internationale Anmeldenummer: PCT/EP2005/007142
(87) Internationale Veröffentlichungsnummer: WO 2006/005458

(56) Entgegenhaltungen:
- WO-A-99/20482
- DE-A1- 4 216 764
- DE-A1- 10 238 484
- US-A1- 2003 204 298

## Beschreibung

Die Erfindung betrifft eine Vorrichtung zur Erzeugung eines haptischen Signals (insbesondere Warnsignal oder Informationssignal) bei einem Fahrzeug (insbesondere bei einem Motorrad), bei dem ein Fahrerwunsch mittels einem Gasdrehgriff vorgebbar ist.

Es sind bereits verschiedenste Vorrichtungen bekannt, bei denen in Abhängigkeit von vorgegebenen Randbedingungen eine Gegenkraft auf das Gaspedal eines Kraftfahrzeugs ausgeübt wird. Die DE 42 16 764 A1 beschreibt eine Vorrichtung, die mittels Steuergerät die Fahrzeug-Istgeschwindigkeit mit einer Fahrzeug-Sollgeschwindigkeit vergleicht, wobei die Fahrzeug-Sollgeschwindigkeit in Abhängigkeit von einem durch einen Witterungsfühler oder einen Funkempfänger aufgenommenen Signal generiert wurde. Mit Erreichen der erzeugten Sollgeschwindigkeit, wird die Verschwenkbarkeit des Gaspedals begrenzt, indem mittels einem Operator eine entgegen der Betätigungsrichtung gerichtete, durch verstärkten Pedaldruck überwindbare, Pedalstellkraft erzeugt wird.

WO 99/20482 A offenbart eine Vorrichtung zur Erzeugung eines haptischen Signals bei einem Fahrzeug, bei dem ein Fahrerwunsch mittels eines Gasdrehgriffes vorgebbar ist, ferner umfassend Rückstellmittel zur Erzeugung einer auf den Gasdrehgriff wirkenden Rückstellkraft und Mittel zur Erzeugung einer auf den Gasdrehgriff in Betätigungsrichtung für eine Beschleunigung bremsend oder antreibend wirkenden Stellkraft, Mittel zur Erfassung von mindestens einer vorgegebenen Fahrbetriebsbedingung, eine Steuereinheit die derart ausgebildet ist, dass in Abhängigkeit von einer Fahrzeug-Sollgeschwindigkeit ein Stellsignal zur Betätigung eines Stellelementes generiert wird.

Ferner ist aus der DE 100 26 048 C2 eine Vorrichtung zur haptischen Signalgebung mittels einem Gaspedal bekannt, bei der in Abhängigkeit von im Fahrbetrieb relevanten Parametern Vibrationen im Gaspedal erzeugbar sind. Hierbei ist der Vibrationsgeber komplett in das Gaspedal integriert und stützt sich nicht einseitig an der Fahrzeugkarosserie ab, so dass die im Gaspedal erzeugten Vibrationen keine erheblichen Auswirkungen auf die Verstellung des Gaspedals haben.

Der Erfindung liegt die Aufgabe zugrunde, eine weitere mögliche Vorrichtung zur Erzeugung eines haptischen Signals bei einem Fahrzeug anzugeben.

Erfindungsgemäß wird die Aufgabe durch die Gesamtheit der Merkmale des Anspruchs 1 gelöst. Gemäß Anspruch 1 handelt es sich um eine Vorrichtung für ein Fahrzeug bei dem der Fahrerwunsch bzw. die entsprechende Lastanforderung durch Positionierung eines Gasdrehgriffes vorgebbar ist. Vorzugweise, ist die erfindungsgemäße Vorrichtung Bestandteil eines Motorrades. Erfindungsgemäß umfasst die Vorrichtung Mittel zur Ermittlung mindestens einer vorgegebenen Fahrbetriebsbedingung. Die zu ermittelnde, und laufend zu überwachende Fahrbetriebsbedingung steht in Bezug mit der Fahrzeuggeschwindigkeit in dem Sinne, dass in Abhängigkeit von der erfassten Fahrbetriebsbedingung, die eine Änderung der aktuellen Fahrgeschwindigkeit in Abhängigkeit von definierten Bedingungen empfehlenswert machen, eine Fahrzeug-Sollgeschwindigkeit (Empfehlung) generierbar ist bzw. durch hinterlegte Algorithmen berechnet wird. Die definierten Bedingungen sind dergestalt, dass in Abhängigkeit von ihnen - im Hinblick auf die Sicherheit für den Fahrer, die Betriebssicherheit des Fahrzeugs oder im Hinblick auf gesetzliche Vorschriften im Bereich der aktuell befahrenen Strecke - eine Änderung der aktuellen Fahrgeschwindigkeit sinnvoll und empfehlenswert erscheint.

Es ist erfindungsgemäß eine Steuereinheit vorhanden, die derart ausgebildet ist, dass in Abhängigkeit von der mindestens einen erfassten Fahrbetriebsbedingung eine Fahrzeug-Sollgeschwindigkeit generierbar ist, und aufgrund der Fahrzeug-Sollgeschwindigkeit ein die Fahrzeug-Sollgeschwindigkeit repräsentierendes Stellsignal zur Betätigung eines Stellelementes generiert wird. Dabei ist das Stellelement derart ausgebildet, dass die Rückstellkraft für den Gasdrehgriff und/oder dass die auf den Gasdrehgriff bremsend oder beschleunigend wirkende Stellkraft einstellbar ist.

Unter Fahrbetriebsbedingungen im Sinne der Erfindung sind alle den Betriebszustand des Fahrzeugs charakterisierende Betriebsgrößen sowie alle Größen (Informationen) des Fahrzeugumfeldes zu verstehen, die jeweils in gemeinsamer Betrachtung mit der Fahrgeschwindigkeit Einfluss auf die Sicherheit des Fahrers, die Betriebssicherheit des Fahrzeugs oder die Einhaltung von Straßenverkehrsvorschriften haben.
Den Betriebszustand des Fahrzeugs charakterisierende Betriebsgrößen sind z.B. Motordrehzahl, Schmieröltemperatur, Schmierölstand, Schmieröldruck, Kühlwassertemperatur bzw. Motortemperatur, Kraftstoffvorrat - aber auch, die aktuelle Schräglage des Fahrzeugs (z.B. Schräglagenwinkel Krad/Fahrbahnoberfläche bei einem Motorrad) oder ob Fahrlicht eingeschaltet ist, eine Bremse betätigt ist oder ob ein Fahrtrichtungsanzeiger gesetzt wurde etc..
Fahrbetriebsbedingungen des Fahrzeugumfeldes sind z.B. Kurvenradien, Abstand zu einem im Vorfeld befindlichen Objekt (z.B. vorausfahrendes Auto), Hinweise auf Geschwindigkeitsbegrenzungen des aktuell befahrenen Streckenabschnittes, Zustände von Signalanlagen (wie Verkehrsampel oder Warnlicht bei einem nicht beschrankten Bahnübergang oder einer abgesicherten Baustelle oder dergleichen), Witterung (z.B. Luftfeuchte) oder Glatteis.

Die Fahrbetriebsbedingungen können über geeignete Erfassungseinrichtungen wie Sensoren oder Kamerasysteme o.d. erfasst werden - es ist aber ebenso denkbar, dass alle oder einzelne Fahrbetriebsbedingungen über, in elektronischen Systemen (wie Navigationssystem oder digitale Straßenkarten o.d.) hinterlegte Daten ermittelt bzw. übermittelt werden. Insbesondere können Fahrbetriebsbedingungen auch über vernetzte Systemkomponenten, wie andere vernetzte Kraftfahrzeuge oder stationäre Netzteilnehmer via Satellit oder Funk oder dergleichen ermittelt werden. Auch auf diese Weise können bevorstehende Stauenden, Unfallstellen, Baustellen oder bevorstehende Kurven(radien) ermittelt werden.

Mit Vorteil ist die Steuereinheit derart ausgebildet, dass sowohl eine im Vergleich zur Fahrzeug-Istgeschwindigkeit verringerte Fahrzeug-Sollgeschwindigkeit als auch eine im Vergleich zur Fahrzeug-Istgeschwindigkeit erhöhte Fahrzeug-Sollgeschwindigkeit generierbar ist. Eine verringerte Sollgeschwindigkeit ist in all den Fällen von Interesse, bei denen eine für den Fahrer und/oder für das Fahrzeug kritische Situation zu Erwarten ist, falls die Geschwindigkeit nicht entsprechend der vorgeschlagenen Sollgeschwindigkeit reduziert wird. Eine erhöhte Sollgeschwindigkeit, kann in für Fahrer und Fahrzeug unkritischen Situationen von Vorteil sein - z.B. wenn der Fahrer sich mit seinem Fahrzeug mit erheblich unterhalb der erlaubten Fahrgeschwindigkeit liegender Istgeschwindigkeit einer grünen Ampel nähert. Auf diese Weise kann der Fahrer, beispielsweise durch die Reduzierung der Rückstellkraft des Gasdrehgriffes, zur Beschleunigung animiert werden.

Es wird also stets eine Fahrzeug-Istgeschwindigkeit erfasst und anhand von mindestens einer Fahrbetriebsbedingung eine geeignete Fahrzeug-Sollgeschwindigkeit berechnet sowie ein dieser Fahrzeug-Sollgeschwindigkeit entsprechendes Stellsignal für eine gezielte Momentenübertragung auf den Gasdrehgriff erzeugt, so dass hierdurch eine gezielte Geschwindigkeitsempfehlung an den Fahrer gegeben wird.

In einer besonders bevorzugten Ausführung der Erfindung ist die erfindungsgemäße Vorrichtung Bestandteil eines Motorrades, wobei die Mittel zur Erfassung der Fahrbetriebsbedingung(en) und die Steuereinheit derart ausgebildet sind, dass der Radius einer aktuell bzw. unmittelbar bevorstehend zu befahrenen Kurve sowie der aktuelle Schräglagenwinkel des Motorrades ermittelt werden und in Abhängigkeit hiervon eine Sollgeschwindigkeit generiert wird, diese mit der aktuellen Istgeschwindigkeit verglichen wird und in Abhängigkeit von diesem Vergleich die Rückstellkraft eines auf den Gasdrehgriff wirkenden Rückstellmittels erhöht oder eine auf den Gasdrehgriff wirkende, der Betätigungskraft entgegenwirkende Bremskraft erzeugt wird. Die Steuereinheit ist bevorzugt derart ausgebildet, dass die Ermittlung des Kurvenradius der aktuell zu befahrenden Kurve unter Verwendung eines Navigationssystems erfolgt. Der Schräglagenwinkel des Motorrades kann z.B. über entsprechende Neigungssensoren ermittelt werden.

Bevorzugt sind die Rückstellmittel als in den Gasdrehgriff integrierte Rückstellfeder oder als Gaszug-Rückholfeder in einem Vergaser oder einer Einspritzeinrichtung ausgebildet. Dabei kann die Rückstellfeder über einen steuerbaren Elektromotor entsprechend mehr oder weniger vorgespannt werden. Die Einbringung eines Bremsmomentes - alternativ oder zusätzlich zur Erhöhung der Rückstellkraft - erfolgt bevorzugt über einen Elektromagneten der derart ausgebildet ist, dass er direkt oder indirekt ein Bremsmoment auf den Gasdrehgriff ausübt (z.B. indem der Rotor des Elektromagneten am Gasdrehgriff und der Stator an der Lenkstange befestigt sind).
Durch die erfindungsgemäße Vorrichtung bekommt der Motorradfahrer eine Information über eine für die aktuelle bzw. unmittelbar bevorstehend zu befahrende Kurve geeignete Kurvengeschwindigkeit. Durch eine derartige Kurvengeschwindigkeitsempfehlung kann die Sicherheit auf unbekannten kurvenreichen Straßen deutlich gesteigert werden.

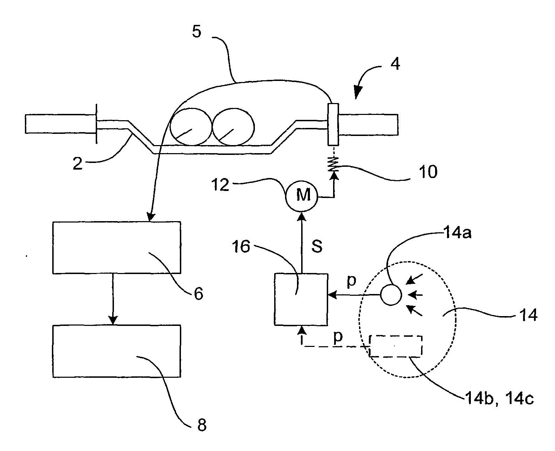

Im Folgenden wird die Erfindung anhand einer Figur näher erläutert. Die einzige Figur zeigt in schematischer Darstellung den Lenker 2 eines Motorrades nebst montiertem Gasdrehgriff 4. Dabei ist der Gasdrehgriff 4 zwecks Übermittlung des Fahrerwunsches über einen Gasseilzug 5 mit einer als Vergaser oder Einspritzeinrichtung ausgebildeten Stelleinrichtung 6 des Motors 8 wirkverbunden. Alternativ zum Gasseilzug 5 kann die Übermittlung des Fahrerwunsches auch über eine Datenleitung, erfolgen, über die elektronisch ein über einen per Gasdrehgriff 4 einstellbarer (dem Fahrerwunsch entsprechender) Potentiometerwert übermittelt wird. Die Handhabe des Gasdrehgriffes 4 ist über ein Rückstellmittel 10, z.B. eine Rückstellfeder, mit einer Rückstellkraft beaufschlagt durch die sie bei Nichtbetätigung des Gasdrehgriffes 4 automatisch in eine Ausgangslage zurückgedreht wird.

Erfindungsgemäß umfasst die Vorrichtung ferner ein mit dem Rückstellmittelmittel 10 wirkverbundenes Stellelement 12. Das Stellelement 10 ist vorliegend als steuerbarer Elektromotor ausgebildet, durch den die Rückstellfeder 10 gezielt in ihrer Vorspannung eingestellt werden kann. Des Weiteren sind Mittel 14 zur Ermittlung von mindestens einer vorgegebenen Fahrbetriebsbedingung p vorhanden. Unter Ermittlung einer Fahrbetriebsbedingung wird im Sinne der Erfindung sowohl die Erfassung von Betriebsgrößen des Fahrzeugs selbst als auch die Erfassung von Zustandsgrößen aus der Umgebung des Fahrzeugs verstanden. Dabei kann die Erfassung über eine Sensorik 14a in messtechnischer Art erfolgen - eine Erfassung kann aber auch durch das Abrufen hinterlegter Daten aus einem Datenspeicher 14b oder durch das Abfragen von Datenspeichern 14c, die ihre Daten aus externen Quellen via Satellit oder Mobilfunk oder dergleichen beziehen, erfolgen. Jede ermittelte bzw. erfasste Fahrbetriebsbedingung wird mittels einer Steuereinheit 16 weiterverarbeitet. Hierfür berechnet die Steuereinheit 16, in Abhängigkeit von der mindestens einen erfassten Fahrbetriebsbedingung, eine zu einer empfehlenden Sollgeschwindigkeit proportionale Stellgröße. Mittels der berechneten Stellgröße wird der auf die Rückstellfeder 10 wirkende (die Rückstellfeder vorspannende) Stellmotor 12 angesteuert. Hierdurch wird die Rückstellfeder 10 bei Erreichen der berechneten Sollgeschwindigkeit soweit vorgespannt, dass ein für den Fahrer spürbares Moment entgegen seiner Betätigungskraft in Richtung Ruheposition des Gasdrehgriffes 4 wirkt und dieser veranlasst wird, seine Geschwindigkeit entsprechend der vorgeschlagenen Sollgeschwindigkeit zu reduzieren. Die erhöhte Rückstellkraft oder die erzeugte bremsende Stellkraft, die jeweils einer Kraft in Betätigungsrichtung zum Zwecke der Beschleunigung entgegenwirkt können durch eine erhöhte Betätigungskraft vom Fahrer bewusst überwunden werden (Überstimmbarkeit der Empfehlung durch den Fahrer).

## Patentansprüche

1. Vorrichtung zur Erzeugung eines haptischen Signals bei einem Fahrzeug, bei dem ein Fahrerwunsch mittels eines Gasdrehgriffes (4) vorgebbar ist, ferner umfassend
- Rückstellmittel (10) zur Erzeugung einer auf den Gasdrehgriff (4) wirkenden Rückstellkraft und/oder Mittel zur Erzeugung einer auf den Gasdrehgriff (4) in Betätigungsrichtung für eine Beschleunigung bremsend oder antreibend wirkenden Stellkraft,
- Mittel (14; 14a, 14b, 14c) zur Erfassung von mindestens einer vorgegebenen Fahrbetriebsbedingung (p), wobei die Fahrbetriebsbedingung (p) dergestalt ist, dass sie eine Änderung der aktuellen Fahrgeschwindigkeit in Abhängigkeit von definierten Bedingungen empfehlenswert macht,
- eine Steuereinheit (16) die derart ausgebildet ist, dass in Abhängigkeit vom Kurvenradius der aktuell zu befahrenden Kurve und dem Schräglagenwinkel des Fahrzeugs zur Fahrbahnoberfläche eine Fahrzeug-Sollgeschwindigkeit generierbar ist, und aufgrund der Fahrzeug-Sollgeschwindigkeit ein Stellsignal (S) zur Betätigung eines Stellelementes (12) generiert wird,
- wobei das Stellelement (12) derart ausgebildet ist, dass hierdurch die Rückstellkraft für den Gasdrehgriff (4) und/oder die auf den Gasdrehgriff (4) wirkende Stellkraft eingestellt wird.

2. Vorrichtung nach Anspruch 1,
**dadurch gekennzeichnet, dass**
die Steuereinrichtung (16) derart ausgebildet ist, dass sowohl eine im Vergleich zur Fahrzeug-Istgeschwindigkeit verringerte Fahrzeug-Sollgeschwindigkeit als auch eine im Vergleich zur Fahrzeug-Istgeschwindigkeit erhöhte Fahrzeug-Sollgeschwindigkeit generierbar ist.

3. Vorrichtung nach einem der vorstehenden Ansprüche, **dadurch gekennzeichnet, dass**
- das Rückstellmittel (10) als eine in ihrer Vorspannung einstellbare Rückstellfeder
- und das Stellelement (12) als ein, die Vorspannung der Rückstellfeder einstellender, Elektromotor ausgebildet ist.

4. Vorrichtung nach einem der vorstehenden Ansprüche,
**dadurch gekennzeichnet, dass** das Stellelement (12) als ein, ein Moment auf den Gasdrehgriff (4) übertragender, Elektromagnet ausgebildet ist.

5. Vorrichtung nach Anspruch 4,
**dadurch gekennzeichnet, dass** der Rotor des Elektromagneten in das drehende Griffteil des Gasdrehgriffes integriert beziehungsweise an diesem angeordnet ist und der Stator des Elektromagneten in die Lenkstange oder in den feststehenden Griffteil des Gasdrehgriffes integriert beziehungsweise an dieser/diesem angeordnet ist.

6. Vorrichtung nach einem der vorstehenden Ansprüche,
**dadurch gekennzeichnet, dass** die Mittel (14; 14a, 14b, 14c) zur Ermittlung der mindestens einen Fahrbetriebsbedingung (p)
- als Mittel zur Erfassung von Kurvenradien und oder Fahrzeug-Schräglage und/oder
- als Mittel zur Ermittlung der gesetzesmäßig zulässigen Fahrgeschwindigkeit und/oder
- als Mittel zur Erfassung Außenlufttemperatur und/oder
- als Mittel zur Erfassung der Witterungsbedingungen und/oder
- als Mittel zur Erfassung von durch vernetzte Fahrzeuge und/oder vernetzte (Fahrzeugleit-)Systeme bereitgestellte Informationen und/oder
- als Mittel der elektronischen Datenverarbeitung mit abgespeicherten Informationen von Fahrzeugleitsystemen ausgebildet sind.

7. Vorrichtung nach einem der vorstehenden Ansprüche,
**dadurch gekennzeichnet, dass** die Steuereinheit (16) derart ausgebildet ist, dass die Ermittlung des Kurvenradius der aktuell zu befahrenden Kurve unter Verwendung eines Navigationssystems erfolgt.

## Claims

1. A device for generating a haptic signal in a vehicle, wherein a driver's request can be predetermined by means of a rotary gas handle (4), also comprising restoring means (10) for generating a restoring force acting on the rotary gas handle (4) and/or means for generating an actuating force acting in a braking or driving manner on the rotary gas handle (4) in the actuating direction for an acceleration, means (14; 14a, 14b, 14c) for detecting at least one predetermined driving operation condition (p), the driving operation condition (p) being such that it makes it advisable to change the current driving speed as a function of defined conditions, a control unit (16) which is configured such that a desired speed of the vehicle can be generated as a function of the radius of the curve on which the vehicle is currently travelling and the oblique angle of the vehicle to the surface of the carriageway, and an actuating signal (S) for actuating an actuating element (12) is generated based on the desired speed of the vehicle, the actuating element (12) being configured such that it adjusts the restoring force for the rotary gas handle (4) and/or the actuating force acting on the rotary gas handle (4).

2. A device according to claim 1, **characterised in that** the control unit (16) is configured such that it is possible to generate a desired speed of the vehicle which is reduced compared to the actual speed of the vehicle as well as a desired speed of the vehicle which is increased compared to the actual speed of the vehicle.

3. A device according to any one of the preceding claims, **characterised in that** the restoring means (10) is configured as a restoring spring, the preloading of which is adjustable, and the actuating element (12) is configured as an electric motor which adjusts the preloading of the restoring spring.

4. A device according to any one of the preceding claims, **characterised in that** the actuating element (12) is configured as an electromagnet transmitting a torque onto the rotary gas handle (4).

5. A device according to claim 4, **characterised in that** the rotor of the electromagnet is integrated into or positioned on the rotating handle part of the rotary gas handle and the stator of the electromagnet is integrated into or positioned on the steering rod or the fixed handle part of the rotary gas handle.

6. A device according to any one of the preceding claims, **characterised in that** the means (14; 14a, 14b, 14c) for determining the at least one driving operation condition (p) are configured as:
means for detecting radii of curves and/or the oblique position of the vehicle, and/or means for determining the legally permissible driving speed, and/or means for detecting the outside air temperature, and/or means for detecting weather conditions, and/or means for acquiring information provided by networked vehicles and/or networked (vehicle control) systems, and/or means for electronic data processing with stored information of vehicle control systems.

7. A device according to any one of the preceding claims, **characterised in that** the control unit (16) is configured such that the radius of the curve on which the vehicle is currently travelling is determined using a navigation system.

## Revendications

1. Dispositif pour générer un signal haptique dans un véhicule selon lequel un souhait du conducteur est prédéfini à l'aide d'une poignée tournante d'accélérateur (4) comprenant en outre
- des moyens de rappel (10) pour générer une force de rappel agissant sur la poignée d'accélération (4) et/ou des moyens pour générer une force d'actionnement agissant sur la poignée d'accélération (4) dans le sens de l'actionnement pour une accélération, dans le sens du freinage ou de l'entraînement,
- des moyens (14 ; 14a, 14b, 14c) pour saisir au moins une condition de fonctionnement (p) prédéfinie, la condition de fonctionnement prédéfinie (p) étant telle qu'elle rend perceptible une variation de la vitesse de déplacement actuelle selon des conditions définies,
- une unité de commande (16) réalisée pour qu'en fonction du rayon de courbure de la courbe dans laquelle on circule actuellement et de l'angle d'inclinaison du véhicule par rapport à la surface de la chaussée, on génère une vitesse de consigne du véhicule et à partir de cette vitesse de consigne du véhicule on génère un signal d'actionnement (S) pour actionner un élément de réglage (12),
- l'élément de réglage (12) étant réalisé pour régler ainsi la force de rappel de la poignée tournante d'accélération (4) et/ou la force de rappel agissant sur la poignée tournante (4) d'accélération.

2. Dispositif selon la revendication 1,
**caractérisé en ce que**
l'installation de commande (16) est réalisée pour générer à la fois une vitesse de consigne du véhicule réduite, par comparaison à la vitesse réelle du véhicule et aussi une vitesse de consigne augmentée du véhicule par comparaison à la vitesse réelle du véhicule.

3. Dispositif selon l'une des revendications précédentes,
**caractérisé en ce que**
- le moyen de rappel (10) est un ressort de rappel dont la précontrainte est réglable et
- l'élément de réglage (12) est un moteur électrique qui règle la précontrainte du ressort de rappel.

4. Dispositif selon l'une des revendications précédentes,
**caractérisé en ce que**
l'élément de réglage (12) est un électroaimant qui transmet un couple à la poignée d'accélération (4).

5. Dispositif selon la revendication 4,
**caractérisé en ce que**
le rotor de l'électroaimant est intégré dans la partie tournante de la poignée d'accélération ou est installé sur cette poignée et le stator de l'électroaimant est installé dans le guidon ou dans la partie fixe de la poignée tournante d'accélération ou est installé sur ou dans ces moyens.

6. Dispositif selon l'une des revendications précédentes,
**caractérisé en ce que**
les moyens (14 ; 14a, 14b, 14c) pour déterminer au moins une condition de fonctionnement (p) sont
- des moyens pour saisir des rayons de courbure ou des positions inclinées du véhicule et/ ou
- des moyens pour déterminer la vitesse réglementaire autorisée et/ ou
- des moyens pour saisir la température de l'air extérieur et/ou
- des moyens pour saisir des conditions météorologiques et/ou
- des moyens pour saisir des informations par des véhicules en réseau et/ou des systèmes en réseau (systèmes de guidage de véhicule) et/ou
- comme moyens de traitement électronique de données contenant en mémoire des informations venant du système de guidage de véhicules.

7. Dispositif selon l'une des revendications précédentes,
**caractérisé en ce que**
l'unité de commande (16) est réalisée pour que la détermination du rayon de courbure de la courbe actuellement en cours d'utilisation se fasse à l'aide d'un système de navigation.
